# EUROPÄISCHE PATENTSCHRIFT

(11) **EP 1 299 214 B1**
(45) Veröffentlichungstag und Bekanntmachung des Hinweises auf die Patenterteilung: **18.08.2004**
(21) Anmeldenummer: 01925568.6
(22) Anmeldetag: 26.04.2001
(51) Int. Cl.: B27D 1/08, B27K 5/02, B32B 21/00, B27K 3/12

(54) **VERFAHREN ZUR HERSTELLUNG VON FURNIERTEN FORMPRESSTEILEN**
METHOD FOR PRODUCING VENEERED COMPRESSED PARTS
PROCEDE DE FABRICATION D'ARTICLES MOULES CONTREPLAQUES

(30) Priorität: 11.07.2000 DE 10033528
(43) Veröffentlichungstag der Anmeldung: 09.04.2003
(73) Patentinhaber: Votteler Lackfabrik GmbH & Co. KG, 70825 Korntal-Münchingen (DE)
(72) Erfinder: VOTTELER, Dietmar, 70825 Korntal-Münchingen (DE); FABRIZ, Siegfried, 74385 Pleidelsheim (DE); SENTKO, Jörg, 71282 Hemmingen (DE)
(74) Vertreter: Wolf, Eckhard, Dr.-Ing.
(86) Internationale Anmeldenummer: PCT/EP2001/004701
(87) Internationale Veröffentlichungsnummer: WO 2002/007938

(56) Entgegenhaltungen:
- DE-A- 4 206 021
- DE-A- 19 753 243
- GB-A- 2 306 389

## Beschreibung

Die Erfindung betrifft ein Verfahren zur Herstellung von furnierten Formpreßteilen, bei welchem ein Träger, mindestens ein Zwischenfurnier und ein Deckfurnier unter Ausübung eines Drucks von mehr als 200 N/cm² bei einer Temperatur von mehr als 120 °C in einer Formpresse unter Bildung eines Rohformteils miteinander verleimt werden, wobei zuvor die Deckfumiere und gegebenenfalls Zwischenfumiere in einer wässrigen Färbeflotte unter Überdruck bei einer Temperatur von 105 °C bis 115 °C durchgefärbt und sodann getrocknet werden, und wobei das Rohformteil an seiner freien Oberfläche lackiert wird.

Bei der Herstellung von fumierten Formpreßteilen dieser Art werden üblicherweise weniger wertvolle Hölzer mit einem Deckfumier aus Edelholz versehen. Um auch bei relativ geringen Fumierqualitäten einen hohen Qualitätsstandard bei den fertigen Formpreßteilen zu erfüllen, ist es bekannt (DE-C 4206021), daß die Deckfurniere und gegebenenfalls die Zwischenfurniere chargenweise in einer wässrigen Färbeflotte durchgefärbt und anschließend getrocknet werden, und daß die auf diese Weise vorbehandelten Deckfumiere sowie die Zwischenfurniere in der Formpresse miteinander verbunden werden. Bei dem bekannten Verfahren enthält die Färbeflotte zusätzlich ein wasserlösliches oder in Wasser dispergierbares, bei Temperaturen oberhalb 115 °C vollständig aktivierbares Bindemittelharz, mit welchem die Furniere beim Färbevorgang behandelt werden. Die Behandlung der Deck- und Zwischenfurniere mit dem Bindemittel hat dort die Aufgabe, die Farbstoffe zu fixieren und im Holz zu verankern, die Farbechtheit und Wasserfestigkeit zu verbessern und das Holz zu verfestigen. Beim Färbeprozeß und beim anschließenden Lagern härtet das Bindemittel noch nicht vollständig aus. Die endgültige Aushärtung erfolgt vielmehr erst unter der Einwirkung von Temperatur und Druck im Zuge der Formverpreßung.

Bei der Anwendung des bekannten Verfahrens haben sich immer wieder Schwierigkeiten dahingehend ergeben, den Bindemittelzusatz in der Färbeflotte zu halten. Es treten oft Ausfällungen auf, die vor allem auf Temperaturreaktionen in den verwendeten Bindemitteln zurückzuführen sind. Weiter war es bisher notwendig, die Furniere durch die Zwischenlage von trockenen Leimfolien miteinander zu verbinden, da sich die Furniere, insbesondere die Deckfurniere bei der einseitigen Beschichtung mit einem Naßleim durch die Feuchtigkeitsaufnahme rollen und verformen.

Ausgehend hiervon liegt der Erfindung die Aufgabe zugrunde, das bekannte Verfahren der eingangs angegebenen Art dahingehend zu verbessern, daß die Fumiervorbehandlung vereinfacht, die Furnierstabilisierung verbessert und der Formpreßvorgang erleichtert wird.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt vor allem der Gedanke zugrunde, daß das beim bekannten Verfahren problematische Bindemittel in der Färbeflotte entbehrlich ist, wenn die durchgefärbten Deckfumiere nachträglich mit einem geeigneten Imprägniermittel behandelt werden, das zu einer Farbstabilisierung und zu einer mechanischen Stabilisierung der Deckfurniere führt. Um dies zu erreichen, wird gemäß der Erfindung vorgeschlagen, daß auf das durchgefärbte Deckfurnier einseitig eine zusammenhängende Schicht aus einem viskosen, aushärtbaren Imprägniermittel aufgetragen wird, daß die Imprägniermittelschicht anschließend unter Beibehaltung ihrer Biegsamkeit vorgehärtet wird, und daß die Imprägniermittelschicht beim Formpreßvorgang unter erhöhter Temperatur endgehärtet wird.

Eine bevorzugte Ausgestaltung der Erfindung sieht vor, daß das Imprägniermittel schichtbildend auf die Oberfläche des durchgefärbten Deckfurniers vorzugsweise in einer Menge von 30 bis 60 g/m² aufgewalzt wird und daß es durch UV-Lichtbestrahlung vorgehärtet wird. Das Deckfumier mit der vorgehärteten Imprägniermittelschicht ist nach wie vor biegsam, so daß es einem Formpreßvorgang unterzogen werden kann. Erst beim Formpreßvorgang wird das Imprägniermittel durch einen bei Temperaturen oberhalb 120 °C aktivierbaren Härter vollständig ausgehärtet.

Als besonders vorteilhaft hat es sich erwiesen, wenn als Imprägniermittel eine Mischung verwendet wird, die
70 bis 95 Gewichtsprozent einer Mischung aus ungesättigten Polyesterharzen mit verschiedenen Molekulargewichten,
2 bis 8 Gewichtsprozent eines Photoinitiators
0,1 bis 2 Gewichtsprozent eines organischen Peroxids
0,1 bis 3 Gewichtsprozent eines Thixotropiermittels
und einen Rest Additive
enthält.

Vorteilhafterweise werden Polyesterharze auf der Basis von Allylether verwendet.

Als Photoinitiator kann ein UV-Initiator verwendet werden, insbesondere aus der Gruppe von Acylphosphinoxiden, Ketalen, Hydroxiketonen, Aminoketonen oder Gemischen derselben.

Als Thixotropiermittel wird vorteilhafterweise SiO₂ verwendet.

Um die Färbemöglichkeiten zu verbessern und auch auf Modetrends bei der Farbgebung besser eingehen zu können, können die Deckfumiere vor dem Färbevorgang in einer wässrigen, wahlweise oxidativen oder reduktiven Bleichflotte, vorzugsweise unter Überdruck bei einer Temperatur von 105 °C bis 115 °C gebleicht werden. Die Bleichintensität kann dabei nach Maßgabe der gewünschten Endfarbe gesteuert werden, und zwar über das verwendete Bleichmittel und Bleichverfahren (oxidativ oder reduktiv). Als Bleichmittel in der wässrigen Bleichflotte kommt Wasserstoffperoxid in einer Konzentration von 0,5 bis 5 Gewichtsprozent in Betracht. Weiter können auch Natrium- oder Kaliumhypochlorit, Natriumperoxid oder Natriumbisulfit zum Einsatz kommen, und zwar abhängig davon, welches Fumierholz vorliegt, welche Bleichwirkung und welcher nachfolgende Färbefarbton erzielt werden soll.

Bei den Zwischenfumieren ist eine Bleichung vor dem Durchfärben grundsätzlich nicht erforderlich, da es hierbei nicht auf helle Farben oder Lichtechtheit ankommt. Die Zwischenfurniere werden vielmehr mit einem dunklen, vorzugsweise schwarzen Farbstoff durchgefärbt, damit bei Kantenanschnitten oder Fensterausschnitten ein farbiges Nachlackieren entfällt.

Die Deckfumiere werden durch die mechanische Imprägnierschicht mechanisch so stabilisiert, daß sie ohne die Gefahr einer Verformung auf ihrer der Imprägnierschicht gegenüberliegenden Seite mit einer Naßleimschicht versehen werden können. Auch die dickeren Zwischenfurniere können einseitig mit einer Naßleimschicht versehen werden. Die Naßleimschicht wird dabei zweckmäßig auf die Furnieroberfläche in einer Menge von 30 bis 40 g/m² aufgewalzt und anschließend bei Raumtemperatur oder bei erhöhter Temperatur bis 40 °C getrocknet. Die Naßleimschicht ist so gewählt, daß sie im Zuge des Formpreßvorgangs bei einer Temperatur oberhalb 70 °C aufschmilzt und bei einer Temperatur oberhalb 120 °C aktivierbar ist. Vorteilhafterweise wird ein Naßleim verwendet, der mindestens eine Verbindung aus der Gruppe wärmereaktiver Polyacrylate, Vinylharze oder Polyurethankombinationen enthält. Um im Crash-Falle ein Splittem des Formpreßteils zu vermeiden, wird vor dem Formpreßvorgang mindestens eine Metallfolie, vorzugsweise aus Aluminium zwischen zwei benachbarte Furniere eingelegt und beim Formpreßvorgang mit diesen verleimt. Um eine ausreichende Haftung der Furnierteile an den Metallfolien zu gewährleisten, enthält das Naßleimgemisch weitere Zusätze auf der Basis Phenolharze oder Resorzinharz.

Um die Deckfumiere beim Preßvorgang und beim Transport an ihrer Oberfläche zu schützen, werden sie auf der Seite der Imprägnierschicht mit einer ablösbaren Schutzfolie vorzugsweise aus Polypropylen versehen, die nach dem Formpreßvorgang abgenommen werden kann.

Die Imprägnierschicht ersetzt an dem fertigen Formpreßteil die sonst übliche Grundierung, so daß das Formpreßteil gegebenenfalls nach einer vorherigen Retusche auf der Seite seiner Imprägnierschicht mit mindestens einer Lackschicht versehen werden kann.

### Ausführungsbeispiele:

### Beispiel 1: Bleichen

In einem Autoklav wird eine wässrige Bleichlösung mit 30 g/l 35-%igem Wasserstoffperoxid angesetzt. Diese Bleichlösung wird zunächst auf 80 bis 90 °C aufgeheizt. Sodann wird eine Charge aus etwa 40 Edelholzfurnieren so in den Autoklav eingeführt, daß die Furniere vollständig von der Bleichlösung umspült werden. Nach Schließen des Autoklaven wird die Bleichlösung auf 105 °C erhitzt und ca. 1 Stunde lang unter entsprechendem Überdruck auf dieser Temperatur gehalten. Nach dem anschließenden Abkühlen der Bleichlösung auf eine Temperatur unter 100 °C und Entlüften des Autoklaven werden die Edelholzfumiere entnommen und getrocknet.

### Beispiel 2: Färben der Deckfumiere

8 kg aus einer kommerziell erhältlichen wasserlöslichen Beize (Positiv-Effekt-Beize) werden in 100 I Wasser einer Temperatur von 80 °C zusammen mit Additiven bis zur vollständigen Auflösung eingerührt. Die dabei entstehende Färbeflotte wird in einen Autoklaven gefüllt. In diese Färbeflotte wird eine Charge aus etwa 40 gebleichten Edelholzfumieren so eingetaucht, daß die Furniere vollständig von der Färbeflotte umspült werden.

Bei geschlossenem Autoklav wird die Färbeflotte anschließend auf 105 °C erhitzt und ca. 1 Stunde lang unter entsprechendem Überdruck auf dieser Temperatur gehalten. Dabei werden die Edelholzfurniere gleichmäßig durchgefärbt. Nach dem Abkühlen und Entlüften des Autoklaven werden die durchgefärbten Furniere aus der Färbeflotte entnommen und getrocknet.

### Beispiel 3: Imprägnieren der Deckfumiere

Die durchgefärbten Edelholzfurniere werden über ein umlaufendes Förderband einer Walzengruppe zugeführt, über deren Walzenspalt ein zähfließendes Bindemittel auf die eine Breitseitenfläche der vorbeilaufenden Deckfurniere in einer Menge von 40 bis 60 g/m² aufgetragen wird. Das Imprägniermittel enthält dabei ein Gemisch aus 85 Gewichtsprozent Polyesterharze mit verschiedenen Molekulargewichten auf der Basis Alylether, 1 % Siliciumdioxid als Thixotropiermittel, 4 Gewichtsprozent Acylphosphinoxid als UV-Initiator sowie etwa 1 Gewichtsprozent eines organischen Peroxids für die Nachhärtung sowie einen Rest Additive.

Im Anschluß an die Walzimprägnierung werden die Deckfumiere über ein Förderband an einer UV-Lampe vorbeigeführt, wodurch es über den UV-Initiator zu einer Vorhärtung des Imprägniermittels kommt. Aufgrund der Vorhärtung bleibt die Biegsamkeit der Deckfurniere für den späteren Formpreßvorgang erhalten. Sie sind trocken und daher stapelbar.

### Beispiel 4: Färben der Zwischenfurniere

Unbehandelte Furniere aus Rotbuche werden mit schwarzem Farbstoff (reaktiver Azo-Metallkomplexfarbstoff) sowie einem Bindemittel auf Hamstoffharzbasis in einem Autoklaven auf 105 °C erhitzt und ca. 1 Stunde lang unter entsprechendem Überdruck auf dieser Temperatur gehalten. Die durchgefärbten Furniere werden nach Abkühlen und Entlüften des Autoklaven entnommen und getrocknet.

### Beispiel 5: Beleimen

Die Deckfumiere werden über ein Förderband einer Walzengruppe zugeleitet, über die sie auf ihrer der Imprägnierschicht gegenüberliegenden Seite mit einer Naßleimschicht auf der Basis wärmereaktiver Polyacrylate, Vinylharze oder Polyurethankombinationen in einer Menge von 30 bis 40 g/m² versehen werden. Ebenso wird auf eine der Breitseitenfläche der Zwischenfumiere im Durchlauf eine Naßleimschicht aufgewalzt. Die Naßleimschicht auf den Furnieren wird bei einer erhöhten Temperatur bis 40 °C getrocknet, so daß Furniere stapelbar sind.

### Beispiel 6: Formpressen

Ein plattenförmiger Träger aus Aluminiumblech, Kunststoff oder Schichtholz, eine Gruppe von schwarz eingefärbten Zwischenfurnieren aus Rotbuche und ein in Holzfarbe eingefärbtes Edelholzfumier werden nach entsprechendem Zuschnitt über Kreuz unter Zwischenlage mindestens einer Aluminiumfolie übereinander gelegt, mit einer Schutzfolie aus temperaturbeständigem Kunststoff versehen und in einer Formpresse bei einer Temperatur von ca. 150 °C und einem Preßdruck von 300 N/cm verformt. Der Preßdruck und die Temperatur werden 3 Minuten lang aufrechterhalten. Dabei werden die Leimschichten auf den Furnieren ausgehärtet. Außerdem kommt es zu einer Nachhärtung der Imprägnierschicht ausgelöst über das organische Peroxid. Anschließend wird die Schutzschicht von der Fumieroberfläche abgezogen. Weiter wird die Furnieroberfläche des so hergestellten Rohformteils gekittet, geschliffen und mit mehreren Lackschichten beispielsweise auf Polyesterbasis versehen.

Zusammenfassend ist folgendes festzuhalten: Die Erfindung bezieht sich auf ein Verfahren zur Herstellung von fumierten Formpreßteilen, bei welchem ein vorzugsweise aus Aluminium bestehender Träger, mindestens ein Zwischenfumier und ein Deckfumier unter Ausübung eines Drucks von mehr als 200 N/cm² bei einer Temperatur von mehr als 120 °C in einer Formpresse unter Bildung eines Rohformteils miteinander verleimt werden. Die Deckfurniere und gegebenenfalls die Zwischenfumiere werden vor dem Formpreßvorgang in einer wässrigen Färbeflotte unter Überdruck bei einer Temperatur von 105 bis 115 °C durchgefärbt und sodann getrocknet, während das fertige Rohformteil an seiner Oberfläche lackiert wird. Die Herstellung der Formpreßteile wird wesentlich vereinfacht, wenn auf die durchgefärbten Deckfurniere einseitig eine zusammenhängende Schicht aus einem pastösen, aushärtbaren Imprägniermittel aufgetragen wird und wenn die Imprägniermittelschicht anschließend unter Beibehaltung einer Biegsamkeit vorgehärtet wird.

Eine Nachhärtung der Imprägniermittelschicht erfolgt beim Formpreßvorgang unter erhöhter Temperatur. Durch die Imprägniermittelschicht werden die Deckfurniere mechanisch und in ihrer Farbbeständigkeit stabilisiert.

## Patentansprüche

1. Verfahren zur Herstellung von furnierten Formpressteilen, bei welchem ein Träger, mindestens ein Zwischenfurnier und ein Deckfurnier unter Ausübung eines Drucks von mehr als 200 N/cm² bei einer Temperatur von mehr als 120 °C in einer Formpresse unter Bildung eines Rohformteils miteinander verleimt werden, wobei zuvor die Deckfurniere mit einer Beize farbbehandelt und sodann getrocknet werden, und wobei das Rohformteil an seiner freien Oberfläche lackiert wird, **dadurch gekennzeichnet, dass** auf das farbbehandelte Deckfurnier einseitig eine zusammenhängende Schicht aus einem viskosen, aushärtbaren Imprägniermittel aufgetragen wird, dass die Imprägniermitteischicht anschließend unter Beibehaltung einer Biegsamkeit vorgehärtet wird, und dass die Imprägniermittelschicht beim Formpressvorgang unter erhöhter Temperatur endgehärtet wird.

2. Verfahren nach Anspruch 1, **dadurch gekennzeichnet, dass** das Imprägniermittel schichtbildend auf die Oberfläche des farbbehandelten Deckfurniers aufgewalzt wird.

3. Verfahren nach Anspruch 1 oder 2, **dadurch gekennzeichnet, dass** das Imprägniermittel in einer Menge von 30 bis 60 g/m² auf das Deckfurnier aufgewalzt wird.

4. Verfahren nach einem der Ansprüche 1 bis 3, **dadurch gekennzeichnet, dass** das Imprägniermittel durch UV-Licht-Bestrahlung vorgehärtet wird.

5. Verfahren nach einem der Ansprüche 1 bis 4, **dadurch gekennzeichnet, dass** das Imprägniermittel durch einen bei Temperaturen oberhalb 120 °C aktivierbaren Härter nachgehärtet wird.

6. Verfahren nach einem der Ansprüche 1 bis 5, **dadurch gekennzeichnet, dass** als Imprägniermittel eine Mischung verwendet wird, die
70 bis 95 Gewichtsprozent einer Mischung aus ungesättigten Polyesterharzen mit verschiedenen Molekulargewichten
2 bis 8 Gewichtsprozent eines Photoinitiators
0,1 bis 2 Gewichtsprozent eines organischen Peroxids
0,1 bis 3 Gewichtsprozent eines Thixotropiermittels
und einen Rest Additive
enthält.

7. Verfahren nach Anspruch 6, **dadurch gekennzeichnet, dass** Polyesterharze auf der Basis Alylether verwendet werden.

8. Verfahren nach Anspruch 6 oder 7, **dadurch gekennzeichnet, dass** als Photoinitiator ein UV-Initiator verwendet wird, insbesondere aus der Gruppe von Acylphosphinoxiden, Ketalen, Hydroxiketonen, Aminoketonen oder Gemischen derselben.

9. Verfahren nach einem der Ansprüche 6 bis 8, **dadurch gekennzeichnet, dass** als Thixotropiermittel SiO₂ verwendet wird.

10. Verfahren nach einem der Ansprüche 1 bis 9, **dadurch gekennzeichnet, dass** die Deckfumiere vor deren Farbbehandlung in einer wässrigen Bleichflotte vorzugsweise unter Überdruck bei einer Temperatur von 105 bis 115 °C gebleicht werden.

11. Verfahren nach Anspruch 10, **dadurch gekennzeichnet, dass** eine Bleichflotte mit einer Wasserstoffperoxidkonzentration von 0,5 bis 5 Gewichtsprozent verwendet wird.

12. Verfahren nach Anspruch 10, **dadurch gekennzeichnet, dass** eine Natrium- oder Kaliumhypochlorit, Natriumperoxid oder Natriumbisulfit enthaltende Bleichflotte verwendet wird.

13. Verfahren nach einem der Ansprüche 1 bis 12, **dadurch gekennzeichnet, dass** als färbender Bestandteil der Beize eine Positiv-Effekt-Beize verwendet wird.

14. Verfahren nach einem der Ansprüche 1 bis 13, **dadurch gekennzeichnet, dass** die Zwischenfumiere mit einer dunklen, vorzugsweise schwarzen Farbe durchgefärbt werden.

15. Verfahren nach einem der Ansprüche 1 bis 14, **dadurch gekennzeichnet, dass** die Deckfumiere auf ihrer der Imprägnierschicht gegenüberliegenden Seite mit einer Nassleimschicht versehen werden.

16. Verfahren nach einem der Ansprüche 1 bis 15, **dadurch gekennzeichnet, dass** die Zwischenfurniere einseitig mit einer Nassleimschicht versehen werden.

17. Verfahren nach Anspruch 15 oder 16, **dadurch gekennzeichnet, dass** die Nassleimschicht auf die Furnieroberfläche aufgewatzt wird.

18. Verfahren nach Anspruch 17, **dadurch gekennzeichnet, dass** die Nassleimschicht mit einer Menge von 30 bis 40 g/m² aufgewalzt wird.

19. Verfahren nach einem der Ansprüche 15 bis 18, **dadurch gekennzeichnet, dass** die Nassleimschicht bei Raumtemperatur oder bei einer erhöhten Temperatur bis 40 °C getrocknet wird.

20. Verfahren nach einem der Ansprüche 15 bis 19, **dadurch gekennzeichnet, dass** die Nassleimschicht im Zuge des Formpressvorgangs bei einer Temperatur oberhalb 70 °C aufgeschmolzen und bei einer Temperatur oberhalb 120 °C aktiviert wird.

21. Verfahren nach einem der Ansprüche 15 bis 20, **dadurch gekennzeichnet, dass** als Nassleim ein Gemisch verwendet wird, das mindestens eine Verbindung aus der Gruppe wärmereaktiver Polyacrylate, Vinylharze oder Polyurethankombinationen enthält.

22. Verfahren nach Anspruch 21, **dadurch gekennzeichnet, dass** das Nassleimgemisch Zusätze auf der Basis Phenolharz oder Resorzinharz enthält.

23. Verfahren nach einem der Ansprüche 1 bis 22, **dadurch gekennzeichnet, dass** das Deckfumier auf der Seite der Imprägnierschicht mit einer ablösbaren Schutzfolie vorzugsweise aus Polypropylen versehen wird, die nach dem Formpressvorgang abgezogen wird.

24. Verfahren nach einem der Ansprüche 1 bis 23, **dadurch gekennzeichnet, dass** vor dem Formpressvorgang mindestens eine Metallfolie vorzugsweise aus Aluminium zwischen zwei benachbarte Furniere eingelegt und beim Formpressvorgang mit diesem verleimt wird.

25. Verfahren nach einem der Ansprüche 1 bis 24, **dadurch gekennzeichnet, dass** das Deckfurnier nach dem Formpressvorgang auf der Seite der Imprägnierschicht mit einer Lackschicht versehen wird.

## Claims

1. Process for production of veneered compressed parts, in which a carrier, at least an intermediate veneer and a cover sheet of veneer are adhered to each other under the exercise of a pressure of greater than 200 N/cm² at a temperature of greater than 120°C to form a preform part, wherein the cover sheet of veneer are prior to this colour treated with a stain and are thoroughly dyed and then dried, and wherein the mold perform part is painted on its exposed surface, wherein on the colour treated cover sheet of veneer on one side a cohesive layer of a viscous, hardenable impregnation material is applied, wherein the impregnation agent layer is subsequently preliminary hardened with maintenance of its flexibility, and wherein the impregnation agent layer during the mold press process is finally hardened at an elevated temperature.

2. Process according to Claim 1, thereby **characterized,** that the impregnation agent is applied upon the surface of the thoroughly dyed cover sheet of veneer with a roller, forming a coating.

3. Process according to Claim 1 or 2, thereby **characterized,** that the impregnation agent is applied onto the cover sheet of veneer in an amount of 30 to 60 g/m².

4. Process according to one of Claims 1 through 3, thereby **characterized**, that the impregnation agent is prehardened by UV light radiation.

5. Process according to one of Claims 1 through 4, thereby **characterized,** that the impregnation agent is finally hardened by a hardener activator at a temperature above 120°C.

6. Process according to one of Claims 1 through 5, thereby **characterized**, that as the impregnation agent a mixture is employed, which comprises
70 to 95 weight percent of a mixture of unsatured polyester resin with various molecular weights,
2 to 8 weight percent of a photo-initiator,
0.1 to 2 weight percent of an organic peroxide,
0.1 to 3 weight percent of a thixotropic material
and balance additives.

7. Process according to Claim 6, thereby **characterized,** that the polyester resin is an allylether resin.

8. Process according to Claim 6 or 7, thereby **characterized,** that as the photo initiator a UV initiator is employed, in particular selected from the group consisting of acylphosphinoxides, ketals, hydroxyketones, aminoketones or mixtures thereof.

9. Process according to Claim 6 or 7, thereby **characterized,** that as the thixotropic agent SiO₂.

10. Process according to Claims 1 through 9, thereby **characterized,** that the cover sheet of veneer is bleached in an aqueous bleach bath preferably with overpressure at a temperature of 105 to 115°C prior to dye treatment.

11. Process according to Claim 10, thereby **characterized,** that a bleach bath with a hydrogen peroxide concentration of 0.5 to 5 weight percent is employed.

12. Process according to Claim 10, thereby **characterized,** that a sodium or calcium hydrochloride, sodium peroxide or sodium bisulphate containing bleach bath is employed.

13. Process according to one of Claims 1 through 12, thereby **characterized**, that as the colouring component of the stain a positive effect stain is employed.

14. Process according to one of Claims 1 through 13, thereby **characterized,** that the intermediate veneer is thoroughly dyed with a dark, preferably black, colour.

15. Process according to one of Claims 1 through 14, thereby **characterized,** that cover sheet of veneer is provided on its side opposite to the impregnation layer with a wet adhesive layer.

16. Process according to one of Claims 1 through 15, thereby **characterized,** that the intermediate layer is provided on one side with a wet adhesive layer.

17. Process according to Claim 15 or 16, thereby **characterized**, that the wet adhesive layer is roller applied or coated upon the veneer surface.

18. Process according to Claim 17, thereby **characterized**, that the wet adhesive layer is rolled or coated on in an amount of 30 to g/m².

19. Process according to one of Claims 15 through 18, thereby **characterized,** that wet adhesive layer is dried at room temperature or an elevated temperature up to 40°C.

20. Process according to one of Claims 25 through 19, thereby **characterized**, that the wet adhesive layer in the course of the mold press process is melted at a temperature above 70°C and activated at a temperature above 120°C.

21. Process according to one of Claims 15 through 20, thereby **characterized,** that as the wet adhesive mixture is employed, which contains at least one compound selected from the group consisting of thermally activatable polyacrylate, vinyl resin or polyurethane combinations.

22. Process according to Claim 21, thereby **characterized,** that the wet adhesive mixture contains additives based in phenolic resin or resorcinol resin.

23. Process according to Claims 1 through 22, thereby **characterized**, that the cover sheet of veneer on the side of the impregnation layer is provided with a removeable protective sheet, preferably of polypropylene, which is pulled off following the mold press process.

24. Process according to one of Claims 1 through 23, thereby **characterized**, that prior to the mold press process at least one metal sheet, preferably of aluminum, is introduced into two adjacent veneers and bonded to them during the mold press process.

25. Process according to one of Claims 1 through 24, thereby **characterized,** that the cover sheet of veneer following the mold press process is provided on the side of the impregnation layer with a lacquer or paint layer.

## Revendications

1. Procédé de fabrication de pièces moulées contreplaquées dans lequel un support, au moins un placage intermédiaire et un placage extérieur ou de couverture sont collés ensemble dans une presse à mouler en exerçant une pression supérieure à 200 N/cm² à une température supérieure à 120 °C, pour former une pièce moulée brute, dans lequel les placages extérieurs sont précédemment traités, en ce qui concerne la couleur, avec un mordant puis séchés, et dans lequel la surface libre de la pièce moulée brute est laquée ou vernie, **caractérisé en ce que** l'on applique d'un côté sur le placage extérieur traité, en ce qui concerne la couleur, une couche continue composée d'un agent d'imprégnation visqueux, apte au durcissement, et **en ce que** la couche d'imprégnation est ensuite pré-durcie en conservant une certaine souplesse, et **en ce que** la couche d'imprégnation subit un durcissement définitif à une température augmentée lors du processus de moulage par compression.

2. Procédé selon la revendication 1, **caractérisé en ce que** l'agent d'imprégnation est appliqué au rouleau en formant une couche sur la surface du placage extérieur traité, en ce qui concerne la couleur.

3. Procédé selon la revendication 1 ou 2, **caractérisé en ce que** l'agent d'imprégnation est appliqué au rouleau dans une quantité comprise entre 30 et 60 g/m² sur le placage extérieur.

4. Procédé selon l'une des revendications 1 à 3, **caractérisé en ce que** l'agent d'imprégnation est pré-durci par irradiation à la lumière UV.

5. Procédé selon l'une des revendications 1 à 4, **caractérisé en ce que** l'agent d'imprégnation est post-durci par un durcisseur qui peut être activé à des températures supérieures à 120 °C.

6. Procédé selon l'une des revendications 1 à 5, **caractérisé en ce que** l'on utilise en tant qu'agent d'imprégnation un mélange qui contient
70 à 95 pour cent en masse d'un mélange de résines de polyesters insaturées de différentes masses moléculaires,
2 à 8 pour cent en masse d'un photo-initiateur,
0,1 à 2 pour cent en masse d'un peroxyde organique,
0,1 à 3 pour cent en masse d'un agent thixotrope,
et pour le reste des additifs.

7. Procédé selon la revendication 6, **caractérisé en ce que** l'on utilise des résines de polyesters à base d'éther allylique.

8. Procédé selon la revendication 6 ou 7, **caractérisé en ce que** l'on utilise comme photo-initiateur un initiateur UV, en particulier issu du groupe des oxydes d'acylphosphine, des cétals, des hydroxycétones, des aminocétones ou des mélanges de ceux-ci.

9. Procédé selon l'une des revendications 6 à 8, **caractérisé en ce que** l'on utilise SiO₂ comme agent thixotrope.

10. Procédé selon l'une des revendications 1 à 9, **caractérisé en ce que** les placages extérieurs, avant leur traitement relatif à la couleur, sont décolorés dans un bain de blanchiment aqueux, de préférence sous surpression à une température comprise entre 105 et 115 °C.

11. Procédé selon la revendication 10, **caractérisé en ce que** l'on utilise un bain de blanchiment présentant une concentration en peroxyde d'hydrogène comprise entre 0,5 et 5 pour cent en masse.

12. Procédé selon la revendication 10, **caractérisé en ce que** l'on utilise un bain de blanchiment contenant de l'hypochlorite de sodium ou de potassium, du peroxyde de sodium ou du bisulfite de sodium.

13. Procédé selon l'une des revendications 1 à 12, **caractérisé en ce que** l'on utilise, en tant que composant colorant du mordant, un mordant à effet positif.

14. Procédé selon l'une des revendications 1 à 13, **caractérisé en ce que** les placages intermédiaires sont teintés dans la masse avec une couleur foncée, de préférence noire.

15. Procédé selon l'une des revendications 1 à 14, **caractérisé en ce que** les placages extérieurs sont munis, sur leur côté opposé à la couche d'imprégnation, d'une couche de colle humide.

16. Procédé selon l'une des revendications 1 à 15, **caractérisé en ce que** les placages intermédiaires sont munis d'un côté d'une couche de colle humide.

17. Procédé selon la revendication 15 ou 16, **caractérisé en ce que** la couche de colle humide est appliquée au rouleau sur la surface du placage.

18. Procédé selon la revendication 17, **caractérisé en ce que** la couche de colle humide est appliquée au rouleau selon une quantité comprise entre 30 et 40 g/m².

19. Procédé selon l'une des revendications 15 à 18, **caractérisé en ce que** la couche de colle humide est séchée à la température ambiante ou à une température augmentée allant jusqu'à 40 °C.

20. Procédé selon l'une des revendications 15 à 19, **caractérisé en ce qu'**au cours du processus de moulage par compression, la couche de colle humide est fondue à une température supérieure à 70 °C, et activée à une température supérieure à 120 °C.

21. Procédé selon l'une des revendications 15 à 20, **caractérisé en ce que** l'on utilise en tant que colle humide un mélange qui contient au moins un composé issu du groupe des polyacrylates, des résines vinyliques ou des combinaisons de polyuréthanes réactifs à la chaleur.

22. Procédé selon la revendication 21, **caractérisé en ce que** le mélange de colle humide contient des additifs à base de résine phénolique ou de résine de résorcine.

23. Procédé selon l'une des revendications 1 à 22, **caractérisé en ce que** le placage extérieur est pourvu sur le côté de la couche d'imprégnation d'une feuille de protection détachable, de préférence en polypropylène, qui est retirée après le processus de moulage par compression.

24. Procédé selon l'une des revendications 1 à 23, **caractérisé en ce qu'**avant le processus de moulage par compression, on insère au moins une feuille métallique, de préférence en aluminium, entre deux placages voisins, et on la colle avec ceux-ci lors du processus de moulage par compression.

25. Procédé selon l'une des revendications 1 à 24, **caractérisé en ce que** le placage extérieur est pourvu, après le processus de moulage par compression, d'une couche de laque ou de vernis sur le côté de la couche d'imprégnation.
